# EUROPEAN PATENT APPLICATION

(11) **EP 2 261 543 A2**
(43) Date of publication of application: **15.12.2010**
(21) Application number: 10162423.7
(22) Date of filing: 10.05.2010
(51) Int. Cl.: F16L 27/02, F16L 27/04

(54) **A connector for a pipe**

(30) Priority: 21.05.2009 GB 0908786
(71) Applicant: Airbus Operations Limited, Bristol, Bristol BS99 7AR (GB)
(72) Inventor: Healy, Daren, Bristol BS99 7AR (GB); Mynott, Colin, Bristol BS99 7AR (GB)
(74) Representative: Butler, Daniel James

(57) **Abstract**

A connector (108) for connecting a pipe, such as a fuel pipe, to another fuel pipe or pipe terminal. The connectors (108) comprises a hollow body member (203) in which a spherical bearing member (207) is rotatably arranged. A pipe (106) is carried in the internal bore (208) of the spherical bearing member (207) and can float in it along the central axis of said pipe (106). Seals (215,216) are provided between the hollow body member (203) and the spherical bearing member (207) as well as between the spherical bearing member (207) and the pipe (106). Mounting of the bearing member (207) is facilitated by a slot (301) in the body member (203).

## Description

### Field of Invention

The present invention relates to a connector for a pipe.

### Background of the Invention

Fluids such as fuel are transported between storage such as tanks and application sites such as engines using lines or pipes. Such pipes are manufactured in lengths and jointed using pipe connectors. The pipe connectors commonly also act as attachment points for securing the pipe to associated structure. Pipes may also be jointed at their ends at respective storage and application sites using pipe terminal connectors. Pipes are commonly installed in complex structures such as aircraft wings. Such installations are generally performed within tight tolerance ranges and thus any variance introduced in the manufacture of such a structure can significantly further complicate the pipe installation process. In use, pipes and their connectors are subject to movement resulting from mechanically or thermally induced movement of both the pipes themselves and of the structure to which they are secured. Such movement may result in pipes or connectors impinging on other pipes or structures, which may cause excessive wear or even leakage.

### Summary of the Invention

An embodiment of the invention provides a connector for a pipe, the connector comprising:
a hollow body member comprising a first cylindrical bore providing a conduit for fluid and further comprising a spherical internal bearing surface at one end of the first bore;
a bearing member comprising a spherical outer surface arranged to substantially conform with the spherical internal bearing surface of the first bore and arranged for rotatable capture within the spherical internal bearing surface of the first bore;
a second cylindrical bore formed within the bearing member for carrying a pipe, the second bore substantially conforming to the external surface of the pipe and arranged to enable float of the pipe within the bore along the central axis of the pipe, wherein the bearing member is arranged to further provide rotation of the pipe together with the bearing member relative to the body member about axes perpendicular to the central axis of the first bore; and
an axially extending slot formed within the spherical internal bearing surface of the body member for insertion of the bearing member within the spherical internal bearing surface when the central axis of the second bore of the bearing member is perpendicular to the central axis of the first bore of the body member, the bearing member being captured within the spherical internal bearing surface of the first bore by the relative rotation of the inserted bearing member and the body member so as to move the respective central axes towards alignment.

The bearing member may comprise a plurality of slots in its outer surface. The connector may comprise a first seal member arranged between the outer surface of the pipe and the second bore for providing a fluid seal for the extent of the float of the pipe within the second bore. The first seal member may be seated in the outer end of the bore. The first seal member may be seated in the outer surface of the pipe. The pipe connector may comprise a second seal member arranged between the spherical internal bearing surface of the first bore and the spherical outer surface of the bearing member for providing a fluid seal for the extend of the rotation between the body member and the bearing member. The second seal may be seated in the spherical internal bearing surface of the first bore. The second seal may be seated in the spherical outer surface of the bearing member. The second seal may be arranged to maintain the fluid seal within a predetermined range of the rotation of the bearing member relative to the body member.

The predetermined range may be greater than ± 15 degrees from the position where the central axes of the first and second bores are aligned. The second bore may be provided with a constriction at its inner end to provide a stop for the float of the pipe. The body member may be provided with one or more flanges providing attachment points. The connector may be arranged for use in an aircraft. The connector may be arranged for use in a fuel line.

### Brief Description of the Drawings

Embodiments of the invention will now be described, by way of example only, with reference to the accompanying drawings in which:
Figure 1 is an illustration of an aircraft in plan view;
Figures 2 is a cross sectional views of two pipe connectors connecting a pipe in the aircraft of figure 1;
Figure 3 is an end view of one of the pipe connectors of figure 2;
Figure 4 is exploded perspective view of one of the pipe connectors of figure 2;
Figures 5, 6 & 7 are a set of perspective views of the assembly sequence for the components of one of the pipe connectors of figure 2;
Figures 8 & 9 are a set of cross sectional views illustrating relative rotation of two pipe connectors connecting a pipe;
Figure 10 is a cross sectional view of a two-piece pipe connector;
Figure 11 is a cross sectional view of an angled pipe connector; and
Figure 12 is an exploded perspective view of another embodiment of a pipe connector.

### Detailed Description of Embodiments of the Invention

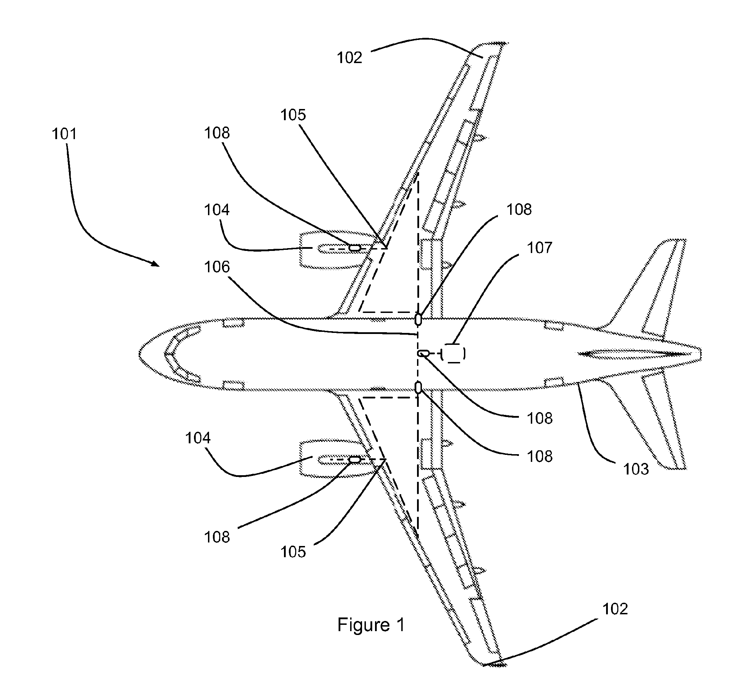

With reference to figure 1, an aircraft 101 comprises a pair of wings 102 faired into a fuselage 103. Each wing 102 carries an engine 104 and an internally located fuel tank 105. The fuel tanks 105 are connected to the engines 104 by a set of fuel lines or pipes 106. The supply of fuel from the fuel tanks 105 to the engines 104 is controlled by a fuel delivery control system 107. The fuel pipes 106 are constructed from a series of lengths of pipes jointed using pipe connectors 108.

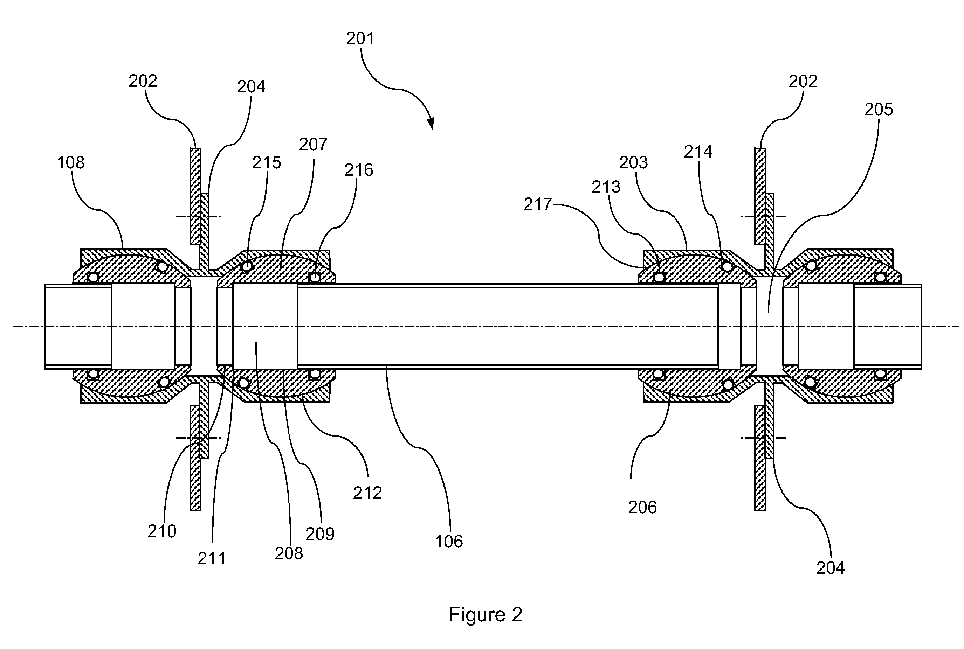

With reference to figure 2, a section of pipe 201 comprises pipe connectors 108 fixed to ribs 202 within the structure of one of the wings 102. Sections of fuel pipe 106 are provided between each pipe connector 108. Each pipe connector 108 comprises a generally cylindrical hollow body member 203, which in the present embodiment, comprises two diametrically opposed radial flanges 204 formed centrally in the outer surface of the body member 203. The flanges 204 provide attachment points for the fixing of each pipe connector 108 to respective ribs 202. The hollow interior of the body member, in the form of a first bore 205, provides a conduit for fluid flowing through the pipes 106 and pipe connectors 108. The interior surface of each distal end of the first bore 205 is formed so as to provide a spherical bearing surface 206.

The pipe connector further comprises a substantially spherical bearing member 207 comprising a centrally aligned second bore 208. The second bore 208 comprises a first section 209 substantially conforming to the outer diameter of the pipes 106 and a second section 210 constricted so as to form of a stop 211 for the float of the pipe 106 located within the second bore 208. The stop 211 is located at the inner end of the bearing member towards the centre of the body member 203. The outer surface of the bearing member 207 is formed to provide an external spherical bearing surface 212 that substantially conforms to the internal spherical bearing surface 206 of the body member 203. Thus each bearing member 207 is captured and freely rotatable within the respective body member 203.

In the present embodiment, the bearing member 207 further comprises first and second seal seats 213, 214 arranged to carry respective first and second seals 215, 216 in the form of o-rings. The first seal seat 213 is provided in the inner surface of the second bore 208 in a plane perpendicular to the central axis of the second bore 208. The first seal seat 213 is positioned towards the outer end of the bearing member 207 away from the centre of the body member 203. The first seal 215 is arranged to provide a fluid seal between the respective pipe 106 and bearing member 207 for the full extent of the axial float of the pipe 106 within the second bore 208. The second seal seat 214 is provided in the external spherical bearing surface 212 also in a plane perpendicular to the central axis of the second bore 208. The second seal seat 214 is positioned towards the inner end of the bearing member 207 in the direction of the centre of the body member 203. The second seal 216 is arranged to provide a fluid seal between the respective bearing member 207 and body member 203 for the full extent of the permitted rotation of the bearing member 207 within the body member 203, that is, the rotation of the bearing member 207 about axes perpendicular to the central axis of the second bore 208. Thus the position of the second seat 214 is selected accordingly.

The bearing member 207 is arranged for a predetermined degree of rotation from the position at which the central axes of the first and second bores 205, 208 are aligned, herein referred to as the aligned position. The degree of rotation is governed by a stop 217 provided by the inner distal edge of the first bore 205, which abuts the pipe 106 at its maximum permitted degree of rotation. Thus the second seal seat 214 is located in the external spherical bearing surface 212 at a position distally rotated about the centre of the bearing member 207 from the innermost edge of the internal spherical bearing surface 206 when the first and second bores 205, 208 are in the aligned position, by a degree greater than the permitted degree of rotation by a predetermined safety margin. In the present embodiment, the permitted rotation is ±16° with a predetermined safety margin of 2°. Therefore, the second seal seat 214 is located in the external spherical bearing surface 212 at 18° distally rotated about the centre of the bearing member 207 from the innermost edge of the internal spherical bearing surface 206 when the first and second bores 205, 208 are in the aligned position. In other words, the second seal seat 214 is positioned so as to maintain the seal 216 in sealing contact with the internal spherical bearing surface 206 for the whole range of relative movement of the body member 203 and bearing member 207.

The pipe 106 is provided with a predetermined amount of float between its inserted end 215 and the stop 211. In the present embodiment, the length of the pipe 106 is selected such that, taking into account the total float provided at each end by the respective pipe connectors 108, the pipe 106 is captured within the pipe connectors 108. In other words, with one end of the pipe 106 abutting the respective stop 211, the other end remains sealingly captured within the opposite pipe connector 108.

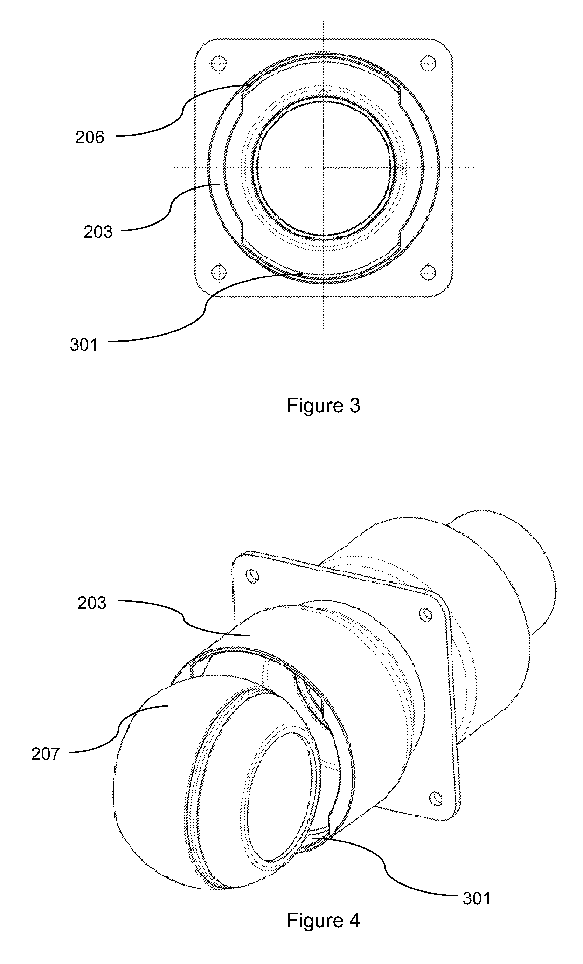

With reference to figure 3, the spherical internal bearing surface 206 of the body member 203 is provided with an axially extending slot 301 enabling insertion of the bearing member 207, carrying its seals 215, 216, within the spherical internal bearing surface 206 when the central axis of the second bore 208 of the bearing member 207 is perpendicular to the central axis of the first bore 205 of the body member 203. The bearing member 207 is captured within the spherical internal bearing surface 206 of the first bore 205 by the relative rotation of the inserted bearing member 207 and the body member 203 so as to move the respective central axes towards the aligned position. The slot 301 provides for additional relative rotation of the bearing member 207 relative to the body member 203 in the direction of the slot 301. In the present embodiment, the maximum permitted rotation in the direction of the slot if is ±18°, that is, and increase of 2° over the permitted rotation in other directions.

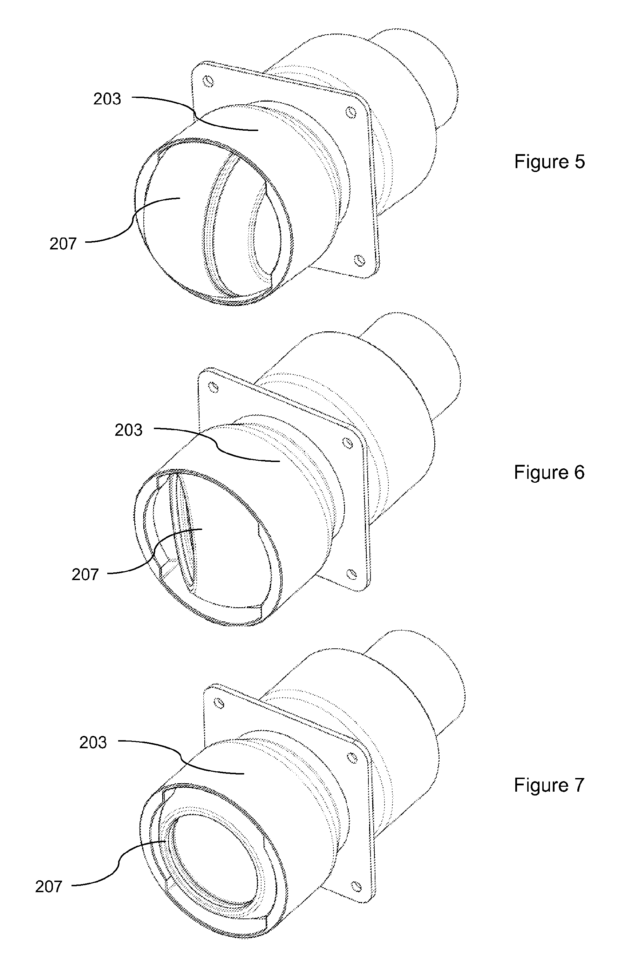

The process of assembly for the pipe connector 106 by the insertion of the bearing member 207 into the slot 301 of the body member 203 and their relative rotation so as to capture of the bearing member 207 within the spherical internal bearing surface 206 of the body member 203 is now described further with reference to figures 4 to 7. The first step in the assembly process comprises the installation of the seals 215, 216 on the bearing member 207 and the alignment of the bearing member 207 for insertion into the slot 301 of the body member 203 as shown in figure 4. With reference to figure 5, the second step comprises the insertion of the bearing member 207 fully into the slot 301 of the body member 203. With reference to figure 6, the third step comprises the rotation of the bearing member 207 relative to the body member 203 so as to move their respective central axes towards the aligned position. The movement of the respective central axes of the body member 203 and bearing member 207 towards alignment causes the bearing member to be captured within the internal spherical bearing surface 206 of the body member 203. Figure 7 shows the body member 203 and the bearing member 207 in the fully aligned position capable of receiving a pipe 106 within the second bore 208. Once a pipe 106 is installed within the pipe connector 108, the bearing member 207 cannot be removed from the body member 203 without first removing the pipe 106. The pipe connector 108 may be disassembled by the reverse procedure to that described above with reference to figures 4 to 7 to enable inspection or maintenance, for example, for cleaning or for replacement of one or both of the seals 215, 216.

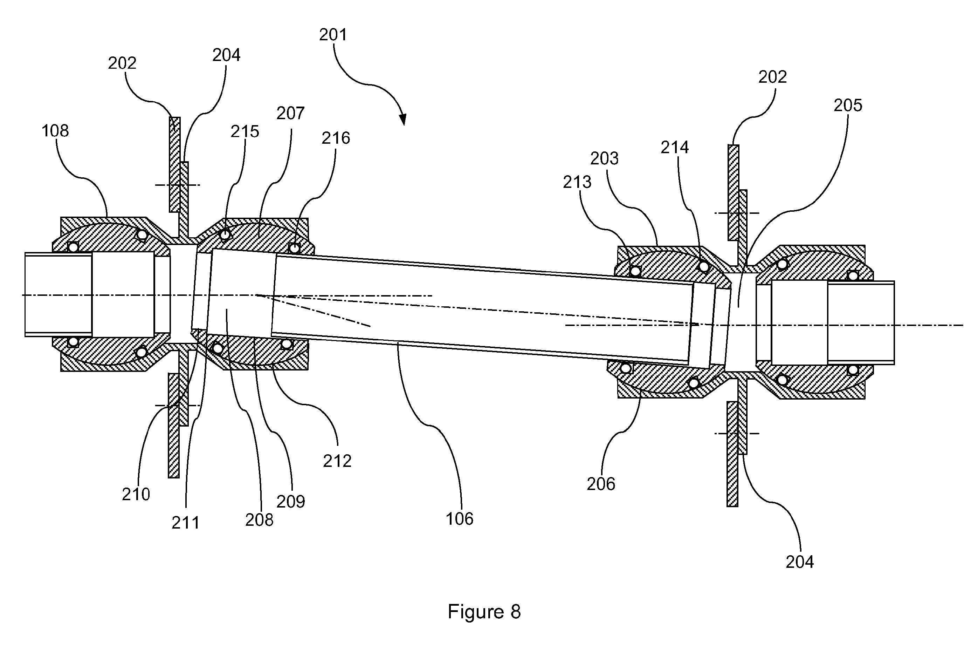

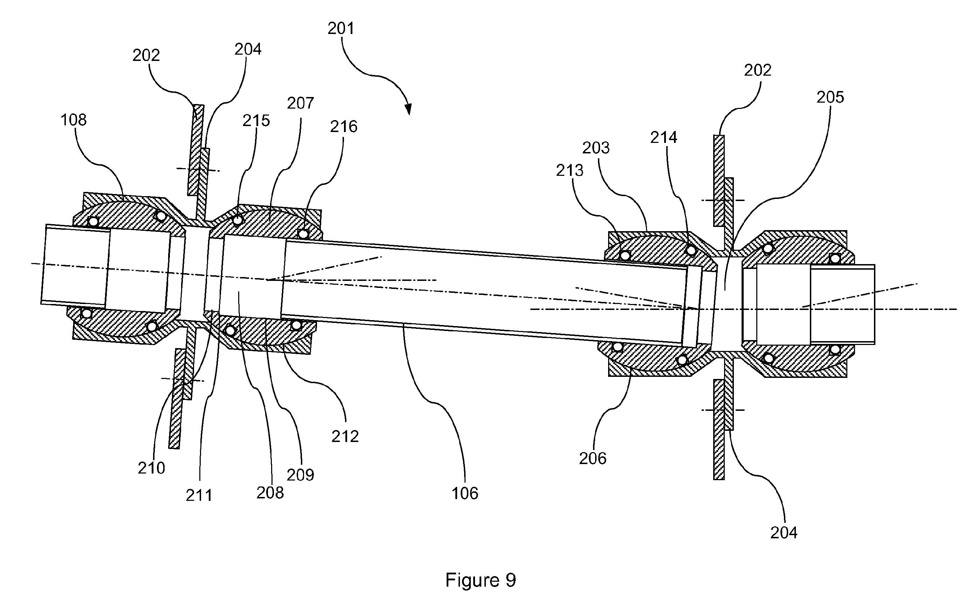

Figure 8 shows an example installation of a pipe 106 between two pipe connectors that are fixed to two parallel structures, such as wing ribs 202. In this arrangement, the fixing points on the ribs 202 are not aligned on the axes of the pipe connectors 108 and respective pipe. The rotation of the respective bearing members 207 enables the pipe 106 to be appropriately connected between the pipe connectors 108. Figure 9 shows an example installation of a pipe 106 between two pipe connectors that are fixed to two non-parallel structures, such as wing ribs 202. In this arrangement, the fixing points on the ribs 202 are also not aligned on the axes of the pipe connectors 108 and respective pipe. The rotation of the right-most bearing member 207 enables the pipe 106 to be appropriately connected between the connectors 108. The misalignment between fixing points as shown in figures 8 or 9 may result from the design of the structure or variations resulting from the manufacturing or assembly process for the relevant structure. Alternatively or in addition, such misalignment may result from movement due to thermal expansion or contraction of the wing structure or mechanical forces. As will be understood by those skilled in the art, the pipe connectors 108 are arranged to accommodate a range of movements through various positions, which may include those shown in figures 8 and 9.

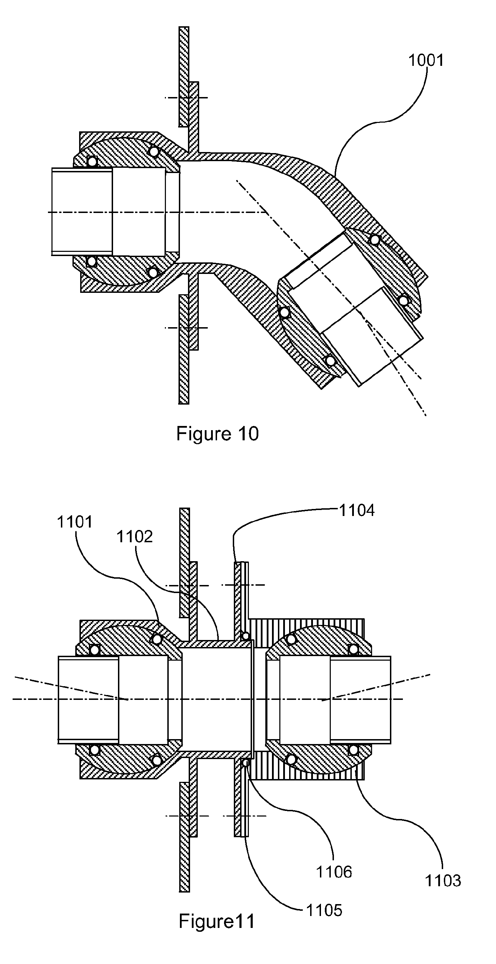

In another embodiment, with reference to figure 10, a pipe connector 1001 is formed as an elbow joint so as to enable two pipes to be connected at a predetermined fixed angle. In the present embodiment, the pipe connector provides a 120° elbow. As will be understood by those skilled in the art, any desired predetermined fixed angle for such an elbow may be provided such as 30°, 45°, 60°, 90° or 150°. As will be understood by those skilled in the art, the predetermined fixed angle is complemented by the angular variation provided by the rotation of the bearing member 207 as described above.

In a further embodiment, with reference to figure 11, the pipe connector 1101 comprises a body member that is formed from two parts 1102, 1103 fixed together by respective radial flanges 1104, 1105 by suitable fixing means (not shown) and sealed by an o-ring 1106. Such a two-part body member 1101, being splitable, enables connection or disconnection of pipes without the removal of both sides of a given pipe connecter. The two-part body member 1101 may be formed as an elbow as described above so as to provide a splitable elbow pipe connector having a predetermined fixed angle.

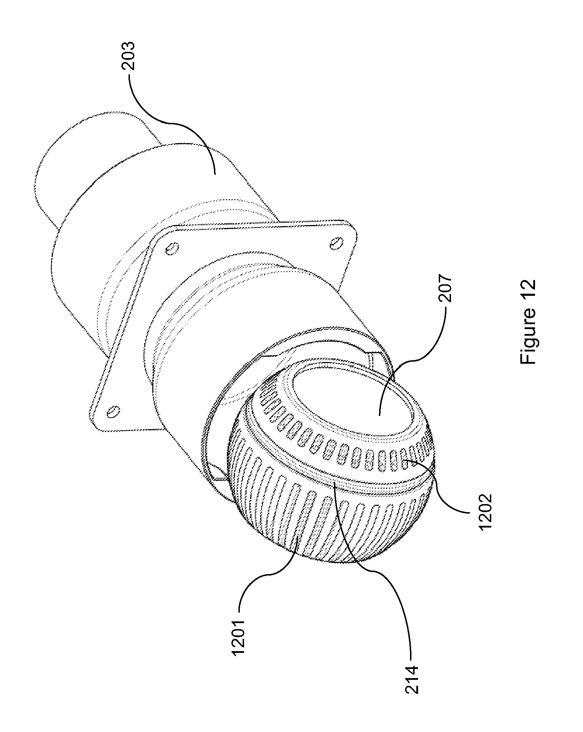

In another embodiment, with reference to figure 12, the bearing member 207 is provided with a first and second set of grooves 1201, 1202 in its outer surface and extending radially towards the central axis of the bearing member 207. The lengths of the grooves 1201, 1202 are arranged parallel to the central axis of the bearing member 207 with one set either side of the seal seat 214. In the present embodiment, the bearing member 207 is moulded, with the grooves 1201, 1202 being formed during the moulding process. The grooves 1201, 1202 reduce the material required for the bearing member 207 and thus reduce its weight. As will be understood by those skilled in the art, the grooves may be machined. Furthermore, the grooves may be formed in other directions, for example, the grooves may be non-radial and run parallel to each other. As will be understood by those skilled in the art, the function provided by the grooves in the above embodiments may be proved by other shaped voids formed in the bearing member.

In another embodiment, the seal between the body member and the bearing member is carried by in a seal seat provided in the internal spherical bearing surface of the body member. In a further embodiment, a seal seat in the outer surface of the pipe carries the seal between the bearing member and the pipe. As will be understood by those skilled in the art, additional seals may be provided in addition to or as alternatives to one or more of the sealed described above.

In another embodiment, the seals are formed from and electrically conductive material so as to provide electrical bonding between the male and female connector elements. Such a seal may be formed from an elastomer with suitable carbon impregnation. Furthermore, the body member and bearing member may be formed form an electrically conductive material such as a metal or other non-metallic electrically conductive material such as a carbon impregnated polymer.

As will be understood by those skilled in the art, the seals may be formed from any suitable material for a given application. The seals may be formed separately or integrally with the female connector members and may be bonded or over-moulded. Furthermore, the pipe connectors may be formed by moulding or machining of any suitable material such as metal or plastics depending on the given application. The seal(s) may be integrally formed of the same material.

As will be understood by those skilled in the art, the ranges of both rotational and axial movement relative movement of the connector elements described above may be shifted, increased or decreased in accordance with a given application for the pipe connector. As will be understood by those skilled in the art, the maximum relative rotation of the body member and bearing member may be limited to maintain good fluid dynamics.

As will be understood by those skilled in the art, the flanges may be fixed to the suitable securing structure by any suitable means such as bolts, rivets, clips, welding or bonding.

As will be understood by those skilled in the art, while embodiments above are described in relation to aircraft and aircraft fuel, embodiments of the invention may be provided for any other suitable application and for use for connecting terminals or pipes for carrying any suitable fluid in any applicable structure. The term fluid includes liquid or gas. Thus, in some embodiments, the pipe connector may be used in system carrying gas such as nitrogen-enriched air (NEA) for use in fuel tank inerting systems.

As will be understood by those skilled in the art, while the embodiment above are described in relation to the straight connection of common diameter pipes, embodiments may also be provided for tee or elbow connections and for connecting pipes of different diameter, that is, providing diameter reduction/expansion connectors. Furthermore, while the pipes and connectors described above have generally circular cross sections, other embodiments may be provided with other suitable sections such as ovoid, rhomboid or triangular.

While the present invention has been illustrated by the description of the embodiments thereof, and while the embodiments have been described in considerable detail, it is not the intention of the applicant to restrict or in any way limit the scope of the appended claims to such detail. Additional advantages and modifications will readily appear to those skilled in the art. Therefore, the invention in its broader aspects is not limited to the specific details representative apparatus and method, and illustrative examples shown and described. Accordingly, departures may be made from such details without departure from the spirit or scope of applicant's general inventive concept.

## Claims

1. A connector for a pipe, said connector comprising:
a hollow body member comprising a first cylindrical bore providing a conduit for fluid and further comprising a spherical internal bearing surface at one end of said first bore;
a bearing member comprising a spherical outer surface arranged to substantially conform with said spherical internal bearing surface of said first bore and arranged for rotatable capture within said spherical internal bearing surface of said first bore;
a second cylindrical bore formed within said bearing member for carrying a pipe, said second bore substantially conforming to the external surface of said pipe and arranged to enable float of said pipe within said bore along the central axis of said pipe, wherein
said bearing member is arranged to further provide rotation of said pipe together with said bearing member relative to said body member about axes perpendicular to the central axis of said first bore; and
an axially extending slot formed within said spherical internal bearing surface of said body member for insertion of said bearing member within said spherical internal bearing surface when the central axis of said second bore of said bearing member is perpendicular to the central axis of said first bore of said body member, said bearing member being captured within said spherical internal bearing surface of said first bore by the relative rotation of said inserted bearing member and said body member so as to move said respective central axes towards alignment.

2. A connector according to any preceding claim in which said bearing member comprises a plurality of slots in its outer surface.

3. A connector according to any preceding claim further comprising a first seal member arranged between said outer surface of said pipe and said second bore for providing a fluid seal for the extent of said float of said pipe within said second bore.

4. A connector according to claim 3 in which said first seal member is seated in the outer end of said bore.

5. A connector according to claim 3 in which said first seal member is seated in said outer surface of said pipe.

6. A connector according to any preceding claim further comprising a second seal member arranged between said spherical internal bearing surface of said first bore and said spherical outer surface of said bearing member for providing a fluid seal for the extend of said rotation between said body member and said bearing member.

7. A connector according to claim 6 in which said second seal is seated in said spherical internal bearing surface of said first bore.

8. A connector according to claim 6 in which said second seal is seated in said spherical outer surface of said bearing member.

9. A connector according to any of claims 6 to 8 in which said second seal is arranged to maintain said fluid seal within a predetermined range of said rotation of said bearing member relative to said body member.

10. A connector according to claim 9 in which said predetermined range is greater than ± 15 degrees from the position where the central axes of the first and second bores are aligned.

11. A connector according to any preceding claim in which said second bore is provided with a constriction at its inner end to provide a stop for said float of said pipe.

12. A connector according to any preceding claim in which said body member is provided with one or more flanges providing attachment points.

13. A connector according to any preceding claim for use in an aircraft.

14. A connector according to any preceding claim for use in a fuel line.
